# EUROPÄISCHE PATENTANMELDUNG

(11) **EP 3 954 595 A1**
(43) Veröffentlichungstag der Anmeldung: **16.02.2022**
(21) Anmeldenummer: 21195765.9
(22) Anmeldetag: 13.02.2019
(51) Int. Cl.: B62D 15/02, B60R 1/00

(54) **VERFAHREN ZUM BETREIBEN EINER FAHRERASSISTENZEINRICHTUNG EINES KRAFTFAHRZEUGS MITHILFE EINER NAVIGATIONSZIELVORGABEVORRICHTUNG, STEUEREINRICHTUNG, NAVIGATIONSZIELVORGABEVORRICHTUNG, UND KRAFTFAHRZEUG**

(30) Priorität: 20.02.2018 DE 102018202526
(62) Teilanmeldung aus: 19705340.8
(71) Anmelder: Audi AG, 85045 Ingolstadt (DE)
(72) Erfinder: Lottes, Daniel, 93346 Ihrlerstein (DE)

(57) **Zusammenfassung**

Die Erfindung betrifft ein Verfahren zum Betreiben einer Fahrerassistenzeinrichtung (12) eines Kraftfahrzeugs (10) mithilfe einer Navigationszielvorgabevorrichtung (28). Eine Steuereinrichtung (14) führt durch: Empfangen eines Zielvorgabesignals, das eine Projektion auf einer befahrbaren Fahrunterlage beschreibt (S8), Festlegen desjenigen Anteils der befahrbaren Fahrunterlage, der mit dem Licht der Projektion beaufschlagt wird, als Fahrzielbereich (S11), und, anhand des empfangenen Zielvorgabesignals, Feststellen einer relativen Position des Kraftfahrzeugs (10) zu dem Fahrzielbereich (S12). Es erfolgt ebenfalls ein Empfangen eines Ausrichtungssignals aus einer Ausrichtungserfassungseinrichtung (36) der Navigationszielvorgabevorrichtung (28), das eine räumliche Zielvorgabeausrichtung der Navigationszielvorgabevorrichtung (28) auf den Fahrzielbereich beschreibt (S5), anhand dessen ein Navigationsziel festgelegt wird (S6). In Abhängigkeit von der festgestellten relativen Position und dem festgestellten Navigationsziel erfolgt ein Festlegen eines Bewegungspfades zu dem Navigationsziel (S17), ein Erzeugen eines Navigationssignals, das ein Steuern des Kraftfahrzeugs (10) entlang des festgelegten Bewegungspfads (S18) beschreibt, und ein Übertragen des erzeugten Navigationssignals an die Fahrerassistenzeinrichtung (12) des Kraftfahrzeugs (10, S19).

## Beschreibung

Die Erfindung betrifft ein Verfahren zum Betreiben einer Fahrerassistenzeinrichtung eines Kraftfahrzeugs. Als Fahrerassistenzeinrichtung wird dabei ein Gerät oder eine Gerätekomponente verstanden, das/die zur Unterstützung des Fahrers in bestimmten Fahrsituationen eingerichtet ist und teilautonom oder autonom in Antrieb, Steuerung oder Signalisierungssysteme des Kraftfahrzeugs eingreifen kann. Die Fahrerassistenzeinrichtung kann dabei vorzugsweise als Fahrerassistenzsystem oder als Steuergerät mit einem Fahrerassistenzsystem ausgestaltet sein.

Kraftfahrzeuge benötigen ein Lenkrad. Heutzutage sind bereits Teile zum autonomen Fahren in das Kraftfahrzeug implementiert, und vollautonomes Fahren wird in Prototypen umgesetzt.

Eine Architektur von hochautonomen Kraftfahrzeugen sieht jedoch immer ein Lenkrad vor, da in Ausnahmesituationen oder Situationen, in denen das autonome System an seine Grenzen gerät, immer noch eine Steuerung durch den Fahrer möglich sein muss. Außerdem können autonome Kraftfahrzeuge nicht "wissen", zum Beispiel in welche Parklücken sie vorzugsweise einparken sollen oder wo sie stehen bleiben sollen. Ein Lenkrad erfordert aber nicht nur viel Bauraum, sondern nimmt auch Platz im Innenraum des Kraftfahrzeugs ein, so das ein Passagier, der vor dem Lenkrad besitzt, weniger Bewegungsfreiheit hat.

Die DE 10 2014 219 538 A1 beschreibt ein Verfahren zum Betreiben von mobilen Plattformen, bei dem die mobilen Plattformen jeweils für eine Signalgebung zur Projektion des eigenen Bewegungspfades der mobilen Plattform im räumlichen Umfeld der mobilen Plattform eingerichtet sind.

Die DE 10 2014 011 811 A1 beschreibt ein Kraftfahrzeug mit einem Beleuchtungssystem zum Informieren eines Verkehrsteilnehmers über eine geplante Bewegung des autopilotgesteuerten Kraftfahrzeugs mittels Abbildung eines Lichtmusters auf eine befahrbare Fläche.

Beide Verfahren zeigen also lediglich an, wie sich das Kraftfahrzeug aktuell verhält oder verhalten wird. Dies sind allerdings nur Hinweise für andere Verkehrsteilnehmer und die eingangs genannte Problematik bei autonom gesteuerten Kraftfahrzeugen in Grenzsituationen wird nicht berücksichtigt.

Die EP 1 176 487 A1 beschreibt ein autonom navigierendes Robotersystem, dessen Orientierung anhand eines von einer Kamera aufgenommenen aktuellen Laserprojektion-Linienmusters und unter Berücksichtigung von vorherigen Untersuchungen eines Verlaufs und einer Anordnung der reflektierenden Linienmustern erfolgt. Obwohl sich das System orientieren kann, mit anderen Worten also weiß, wo es ist, bräuchte ein Benutzer bei einer Implementierung eines solchen Systems in ein Kraftfahrzeug weiterhin ein Lenkrad für eine etwaige Übernahme der Fahraufgabe.

Die WO 2016/128654 A1 betrifft eine Vorrichtung und ein Verfahren zum automatischen Parken eines Kraftfahrzeugs, die dazu ausgelegt sind, die Aktion des Parkens des Fahrzeugs auf einem Parkplatz, insbesondere auf einem engen Parkplatz, zu unterstützen.

Die KR 2012 0033162 A betrifft eine Routenführungsmethode unter Verwendung eines Bildprojektionsmodus und ein tragbares Terminal unter Verwendung derselben, um es einem Benutzer zu ermöglichen, Routeninformationen effektiv zu erfassen, indem ein Routenführungsbild auf eine äußere Oberfläche projiziert wird.

Eine der Erfindung zu Grunde liegende Aufgabe ist das Ermöglichen eines lenkradlosen Steuerns eines Kraftfahrzeugs.

Die gestellte Aufgabe wird durch das erfindungsgemäße Verfahren und die erfindungsgemäßen Vorrichtungen gemäß der nebengeordneten Patentansprüche gelöst. Vorteilhafte Weiterbildungen sind durch die Unteransprüche gegeben.

Die Erfindung basiert auf der Idee, zur Vorgabe eines Navigationsziels eine Navigationszielvorgabevorrichtung bereitzustellen, die das Navigationsziel durch ihre Ausrichtung auf ein Fahrziel oder Navigationsziel vorgibt, sowie denjenigen Bereich, auf dem das Kraftfahrzeug unmittelbar zum Stehen kommen soll, durch zum Beispiel einen Lichtpunkt und/oder eine Projektion eines Bildes markiert. Das Navigationsziel ist dabei durch geographische Koordinaten des Fahrzielbereichs einer durch das kraftfahrzeugbefahrbaren Fahrunterlage bestimmt. Mit anderen Worten zeigt ein Benutzer der Navigationszielvorgabevorrichtung zum Beispiel mit einem Vorgabebereich der Navigationszielvorgabevorrichtung auf zum Beispiel denjenigen Parkplatz, auf den das Kraftfahrzeug fahren soll. Anders als bei einer Richtungsvorgabe mit einem Lenkrad wird nicht der die nächste Fahrtrichtung vorgegeben, sondern exakt derjenige Bereich der beispielhaften Straße, auf dem das Kraftfahrzeug zum Stehen kommen soll. Im Gegensatz zu einem Navigationsgerät, wobei das Navigationsziel durch Eingabe der geographischen Koordinaten des Fahrtziels festgelegt wird, kann direkt zum Beispiel die gewünschte Parkposition als Fahrtziel ausgewählt werden, auf dem das Kraftfahrzeug die Fahrt beenden soll.

Die Navigationszielvorgabevorrichtung kann deswegen sehr klein und handlich ausgestaltet sein und nimmt deswegen nicht viel Bauraum in Anspruch. Die Navigationszielvorgabevorrichtung nimmt keinen großen Anteil des Bewegungsraumes eines Insassen in Anspruch, und ist mit einer Hand bedienbar. Durch das erfindungsgemäße Verfahren und die erfindungsgemäßen Vorrichtungen ist es möglich, auch kleine Bereiche, zum Beispiel eine Parklücke, als Navigationsziel vorzugeben. Mit der erfindungsgemäßen Navigationszielvorgabevorrichtung und dem erfindungsgemäßen Verfahren können autonome und semi-autonome Kraftfahrzeuge ohne Lenkrad bereitgestellt werden.

Dadurch, dass der Fahrer des Kraftfahrzeugs durch das fehlende Lenkrad mehr Bewegungsfreiheit hat, wird für den Fahrer das Betreiben des Kraftfahrzeugs in beispielsweise einer Unfallsituation sicherer, da sich zum Beispiel bei einem Auffahrunfall kein Lenkrad vor seinem Oberkörper befindet.

Im Unterschied zu einem Lenkrad muss mit der Navigationszielvorgabevorrichtung kein mechanischer oder drahtgebundener Kontakt zu einem Lenkgetriebe bestehen, weswegen die Navigationszielvorgabevorrichtung auch als Fernbedienung benutzt werden kann. Durch die Ermöglichung der Steuerung mittels einer solchen Fernbedienung kann das Kraftfahrzeug auch aus der Ferne gerufen werden, ohne dass eine erweiterte Interaktion notwendig ist, beispielsweise kein umständliches Herausholen eines mobilen Endgeräts, beispielsweise Smartphones, aus einer Tasche, kein Öffnen eines Anwenderprogrammes ("App"), und kein Anfordern des Kraftfahrzeugs über zum Beispiel eine solche App.

Das erfindungsgemäße Verfahren und die erfindungsgemäßen Vorrichtungen sind aus den genannten Gründen gut dazu geeignet, Systemschwächen von autonom fahrenden Kraftfahrzeugen zu überbrücken.

Das erfindungsgemäße Verfahren zum Betreiben einer Fahrerassistenzeinrichtung eines Kraftfahrzeugs mithilfe einer Navigationszielvorgabevorrichtung weist die folgenden, durch eine Steuereinrichtung durchgeführten Schritte auf. Unter einer Steuereinrichtung wird dabei ein Gerät oder eine Gerätekomponente zum Empfangen und Auswerten von Signalen, sowie zum Erzeugen von Steuersignalen, verstanden, das/die zum Beispiel als Steuergerät oder Steuerplatine ausgestaltet sein kann. Das Kraftfahrzeug kann vorzugsweise als Kraftwagen, insbesondere als Personenkraftwagen oder pilotiert fahrender Personenkraftwagen, ausgestaltet sein.

Die Steuereinrichtung führt ein Empfangen eines Zielvorgabesignals aus einer Erfassungseinrichtung des Kraftfahrzeugs durch, wobei das Zielvorgabesignal eine durch die Erfassungseinrichtung erfasste Projektion eines Bildes und/oder eines Lichtpunkts und/oder eines Lichtfeldes auf einer durch das Kraftfahrzeug befahrbaren Fahrunterlage beschreibt, vorzugsweise eine Projektion aus einer Ausgabeeinrichtung der Navigationszielvorgabevorrichtung. Diese dient später zur Orientierung des Kraftfahrzeugs im Raum, wobei durch die Projektion eine Zielposition vorgegeben wird. Die Erfassungseinrichtung ist dabei ein Gerät oder eine Gerätekomponente zum Aufnehmen oder anderweitigen Erfassen des Bildes, und kann beispielsweise eine Kamera und/oder einen Lichtsensor aufweisen. Eine Ausgabeeinrichtung ist eine Gerätekomponente oder ein Gerät zum Ausgeben von Licht und/oder von einem Licht- oder Bildsignal. Die Ausgabeeinrichtung kann beispielsweise als Laser-Pointer oder als Projektor oder als Lampe ausgestaltet sein.

Die Steuereinrichtung führt ein Festlegen desjenigen Anteils der befahrbaren Fahrunterlage, der mit dem Licht der Projektion beaufschlagt wird, als Fahrzielbereich durch. Anhand des empfangenen Zielvorgabesignals erfolgt ein Feststellen einer aktuellen, relativen Position des Kraftfahrzeugs zu dem festgelegten Fahrzielbereich.

Es erfolgt ein Empfangen eines Ausrichtungssignals aus einer Ausrichtungserfassungseinrichtung der Navigationszielvorgabevorrichtung, das eine räumliche Zielvorgabeausrichtung der Navigationszielvorgabevorrichtung auf den Fahrzielbereich beschreibt. Als Ausrichtungserfassungseinrichtung wird dabei eine Gerätekomponente verstanden, die zum Erfassen einer räumlichen Ausrichtung der Navigationszielvorgabevorrichtung ausgestaltet und/oder eingerichtet ist, und zum Beispiel ein Drehratensignal erzeugen kann, das die erfasste Ausrichtung, also beispielsweise eine räumliche Lage der Navigationszielvorgabevorrichtung, beschreiben kann. Die Ausrichtungserfassungseinrichtung kann hierzu beispielsweise ein Gyrometer und/oder einen GPS-Empfänger und/oder einen Drehratensensor aufweisen. Das Ausrichtungssignal kann beispielsweise das Drehratensignal sein, ein GPS-Signal oder ein Ortungssignal. Die Zielvorgabeausrichtung ist diejenige Ausrichtung der Navigationszielvorgabevorrichtung, in der diese zum Beispiel mit einem vorbestimmten Bereich auf den Fahrzielbereich ausgerichtet ist. Beispielsweise durch eine Bedienhandlung kann der Benutzer Vorgeben, wann sich die Navigationszielvorgabevorrichtung in der Zielvorgabeausrichtung befindet.

Mit anderen Worten wird erfindungsgemäß kein Lenkmanöver durchgeführt, das eine Fahrtrichtung vorgibt, sondern es wird durch Zeigen oder Weisen mithilfe der Navigationszielvorgabevorrichtung auf den Fahrzielbereich das absolute Navigationsziel vorgegeben.

In Abhängigkeit von dem empfangenen Ausrichtungssignal erfolgt ein Feststellen einer absoluten Position des Fahrzielbereichs als Navigationsziel, das zum Beispiel durch geographische Koordinaten charakterisiert sein kann, zum Beispiel durch einen Abgleich mit geographischen Koordinaten einer Position der Navigationszielvorgabevorrichtung. Beispielsweise kann ein Vorgabebereich einer länglich ausgestalteten Navigationszielvorgabevorrichtung zum Beispiel an einem Endbereich der Navigationszielvorgabevorrichtung angeordnet sein, der auf das Navigationsziel zeigen und den Fahrzielbereich mit Licht beaufschlagen kann. Optional kann hierbei das erfindungsgemäße Verfahren auch den Schritt des Feststellens einer Ausrichtung des Vorgabebereichs umfassen, beispielsweise anhand der Ausrichtung der Navigationszielvorgabevorrichtung.

In Abhängigkeit von der festgestellten relativen Position des Kraftfahrzeugs zu dem festgelegten Fahrzielbereich und dem festgestellten Navigationsziel legt die Steuereinrichtung einen Bewegungspfad von einer aktuellen Position des Kraftfahrzeugs zu dem Navigationsziel fest.

Es erfolgt ein Erzeugen eines Navigationssignals, das ein Steuern des Kraftfahrzeugs entlang des festgelegten Bewegungspfads an das Navigationsziel beschreibt. Es folgt ein Übertragen des erzeugten Navigationssignals an die Fahrerassistenzeinrichtung des Kraftfahrzeugs. Die Fahrerassistenzeinrichtung kann dann das Kraftfahrzeug dann zu dem festgelegten Navigationsziel steuern. Es ergeben sich die oben genannten Vorteile.

Die Projektion ist ein Bild eines für die Navigationszielvorgabevorrichtung spezifischen Identifikationscodes, vorzugsweise eines QR-Codes. Die Steuereinrichtung führt anhand des empfangenen Zielvorgabesignals ein Feststellen des Identifikationscodes durch, und, anhand des ermittelten Identifikationscodes, ein Überprüfen einer Berechtigung der Navigationszielvorgabevorrichtung zum Vorgeben des Navigationsziels. Mit anderen Worten authentisiert sich die Navigationszielvorgabevorrichtung mit dem Identifikationscode, und die Steuereinrichtung authentifiziert die Navigationszielvorgabevorrichtung anhand des erfassten Identifikationscodes. Hierzu kann die Steuereinrichtung beispielsweise eine Bildanalysesoftware aufweisen, und zum Beispiel anhand des erfassten Bildes den Identifikationscode auslesen.

Das Navigationszielsignal wird nur dann erzeugt, falls das Überprüfen die Berechtigung der Navigationszielvorgabevorrichtung feststellt.

Mit anderen Worten überprüft die Steuereinrichtung, ob das von der Navigationszielvorgabevorrichtung übertragene Zielvorgabesignal an das Kraftfahrzeug gerichtet ist oder nicht. Das Zielvorgabesignal kann so dem richtigen Kraftfahrzeug zugeordnet werden. Einer Fehlbedienung kann damit vorgebeugt werden. Vor allem wird es einer unberechtigten Person erschwert, mithilfe einer unberechtigten Navigationszielvorgabevorrichtung das Kraftfahrzeug zu steuern.

Eine besonders benutzerfreundliche und intuitive Bedienung sowie eine sehr genaue Vorgabe des Navigationsziels wird durch eine bevorzugte Ausführungsform des erfindungsgemäßen Verfahrens ermöglicht, wobei die Steuereinrichtung ein Drehratensignal als Ausrichtungssignal aus der Ausrichtungserfassungseinrichtung empfangen kann, wobei das Drehratensignal ein Ändern einer Referenzausrichtung der Navigationszielvorgabevorrichtung in die Zielvorgabeausrichtung beschreiben kann.

Die Referenzausrichtung ist eine erste Ausrichtung der Navigationszielvorgabevorrichtung, die die Navigationszielvorgabevorrichtung einnimmt, bevor sie in die Zielvorgabeausrichtung umpositioniert wird. Unter einer Ausrichtung werden eine räumliche Lage und/oder eine absolute geographische Position der Navigationszielvorgabevorrichtung verstanden. Unter einer Lage wird hierbei die Art und Weise verstanden, wie die Navigationszielvorgabevorrichtung dreidimensional im Raum liegt, also zum Beispiel eine relative Lage im Raum, also eine Lage, die sich innerhalb der gleichen Position mit gleichbleibenden geographischen Koordinaten durch zum Beispiel Drehen oder Schwenken ändern kann. Referenzausrichtung und Zielvorgabeausrichtung können beispielsweise anhand einer Ausrichtung einer Längsachse der Navigationszielvorgabevorrichtung ermittelt werden.

Mit anderen Worten kann das Ausrichtungssignal oder Drehratensignal eine Umpositionierung der Navigationszielvorgabevorrichtung beschreiben, also zum Beispiel eine Änderung einer Ausgangslage. Die Umpositionierung kann beispielsweise durch Schwenken, eine Positionsänderung oder eine Winkeländerung beispielsweise der Längsachse erfolgen. Mit anderen Worten kann das Ausrichtungssignal eine Drehrate der Navigationszielvorgabevorrichtung beschreiben. Gemäß dieser Ausführungsform kann das Feststellen des Navigationsziels in Abhängigkeit von dem empfangenen Drehratensignal erfolgen; vorzugsweise durch Feststellen eines durch das Drehratensignal beschriebenen Drehwinkels um eine Symmetrieachse der Navigationszielvorgabevorrichtung, und/oder durch Feststellen einer durch das Drehratensignal beschriebenen Änderung einer absoluten geographischen Position der Navigationszielvorgabevorrichtung. Durch beide Varianten kann das Navigationsziel besonders treffsicher ermittelt werden, insbesondere durch eine Kombination beider Varianten.

Optional kann durch die Steuereinrichtung ein Feststellen eines Abstandes zwischen dem Vorgabebereich der Navigationszielvorgabevorrichtung und dem Fahrtzielbereich erfolgen, auf den der Vorgabebereich der Navigationszielvorgabevorrichtung ausgerichtet ist. Das Erzeugen des Navigationszielsignals kann dann von dem festgestellten Abstand abhängen. Für diese Ausführungsform kann die Ausrichtungserfassungseinrichtung beispielsweise einen Lasermessstock aufweisen. Auch diese Variante ermöglicht ein sehr genaues Ermitteln des Navigationsziels.

Gemäß einer besonders bevorzugten Ausführungsform des erfindungsgemäßen Verfahrens kann das Feststellen des Navigationsziels durch Festlegen einer Ausrichtung eines Strahlenganges eines ausgegebenen Lichtstrahls, vorzugsweise eines Laserstrahls einer Ausgabeeinrichtung der Navigationszielvorgabevorrichtung erfolgen, wobei die Ausgabeeinrichtung vorzugsweise als Lichtzeiger ausgestaltet sein kann. Bei dieser Ausführungsform wird der Fahrzielbereich, der auch als Fahrtziel bezeichnet werden kann, mit dem Licht des Lichtstrahls beaufschlagt, sodass der Benutzer der Navigationszielvorgabevorrichtung sehen kann, welches Navigationsziel er vorgibt. Einer Fehlbedienung wird so vorgebeugt, und die Vorgabe des Navigationsziels kann so sehr genau erfolgen.

Beispielsweise kann das Zielvorgabesignal ein auf die Projektionsfläche einer Umgebung der Navigationszielvorgabevorrichtung projiziertes Bild eines Umrisses des Kraftfahrzeugs beschreiben. Das projizierte Bild kann vorzugsweise von der Ausgabeeinrichtung der Navigationszielvorgabevorrichtung ausgegeben werden, wobei die Ausgabeeinrichtung zum Beispiel ein Leuchtmittel, beispielsweise eine Lampe, und eine Schablone mit dem Umriss des Kraftfahrzeugs, durch die das Licht des Leuchtmittels strahlen kann, aufweisen kann.

Die Steuereinrichtung kann anhand des empfangenen Zielvorgabesignals ein Ermitteln einer Soll-Position des Kraftfahrzeugs an dem Navigationsziel durchführen, wobei das erzeugte Navigationssignal die Soll-Position beschreiben und damit vorgeben kann. Eine solche Soll-Position kann beispielsweise vorgeben, wo und/oder wie das Heck des Kraftfahrzeugs und die Kraftfahrzeugvorderseite angeordnet sein sollen. Durch diese Ausführungsform des erfindungsgemäßen Verfahrens werden dem Benutzer eine Positionierungshilfe und eine Orientierungshilfe bereitgestellt.

Damit das Kraftfahrzeug beim Fahren entlang des Bewegungspfads den Benutzer nicht gefährdet, falls dieser die Navigationszielvorgabevorrichtung als Fernbedienung benutzt, kann die Steuereinrichtung anhand der aktuellen Position des Kraftfahrzeugs und/oder einer aktuellen Position der Navigationszielvorgabevorrichtung ein Feststellen einer relativen oder absoluten Position des Benutzers der Navigationszielvorgabevorrichtung zum Kraftfahrzeug durchführen. Das Festlegen des Bewegungspfades kann in diesem Fall von der festgestellten Position des Benutzers abhängen.

Die oben gestellte Aufgabe wird gelöst durch eine Steuereinrichtung, die dazu eingerichtet ist, die eine Steuereinrichtung betreffenden Verfahrensschritte eines Verfahrens der oben beschriebenen Ausführungsformen durchzuführen. Vorzugsweise kann die Steuereinrichtung eine Prozessoreinrichtung aufweisen, also ein Gerät oder eine Gerätekomponente zur elektronischen Datenverarbeitung. Die Prozessoreinrichtung kann vorzugsweise mindestens einen Mikrokontroller und/oder mindestens einen Mikroprozessor aufweisen. Ein Programmcode, der in einer Speichereinrichtung, also in einem Datenspeicher, gespeichert sein kann, kann dazu ausgelegt sein, bei Ausführen durch die Prozessoreinrichtung die Steuereinrichtung dazu veranlassen, die die Steuereinrichtung betreffenden Verfahrensschritte der obigen Ausführungsformen des erfindungsgemäßen Verfahrens durchzuführen. Es ergeben sich die oben genannten Vorteile.

Die oben gestellte Aufgabe wird gelöst durch eine Navigationszielvorgabevorrichtung, die eine Ausrichtungserfassungseinrichtung aufweist, wobei die Ausrichtungserfassungseinrichtung zum Erfassen einer räumlichen Ausrichtung der Navigationszielvorgabevorrichtung ausgestaltet und/oder eingerichtet ist. Die Navigationszielvorgabevorrichtung ist außerdem dazu eingerichtet, das Ausrichtungssignal zu erzeugen, das die erfasste Ausrichtung beschreibt.

Die Navigationszielvorgabevorrichtung weist außerdem eine Ausgabeeinrichtung auf, die a) als Lichtzeiger zum Ausgeben eines Lichtstrahls ausgestaltet ist, und/oder b) zum Ausgeben und/oder Projizieren eines Bildes. Es ergeben sich die oben genannten Vorteile. Die Ausgabeeinrichtung kann dabei vorzugsweise als sogenannter "Laser-Pointer" ausgestaltet sein, oder zum Beispiel eine Lichtquelle und eine Schablone aufweisen, wobei die Schablone das Licht in Form des zu projizierenden Bildes durchlassen kann.

Die Navigationszielvorgabevorrichtung weist dabei eine Ausführungsform der erfindungsgemäßen Steuereinrichtung auf. Es ergeben sich die oben genannten Vorteile.

Optional kann die Navigationszielvorgabevorrichtung als Kraftfahrzeugschlüssel ausgestaltet und/oder eingerichtet sein, vorzugsweise als Funkschlüssel. Dadurch wird eine multifunktionale Navigationszielvorgabevorrichtung bereitgestellt.

Die Navigationszielvorgabevorrichtung kann beispielsweise an einer Instrumententafel des Kraftfahrzeugs angeordnet sein. Um jedoch eine Fernbedienung zu erleichtern und um ein aufwändiges Nachrüsten eines Kraftfahrzeugs zu umgehen, kann die Navigationszielvorgabevorrichtung vorzugsweise als mobiles, portables Gerät ausgestaltet sein.

Die oben gestellte Aufgabe wird gelöst durch ein Kraftfahrzeug, das eine Ausführungsform der erfindungsgemäßen Steuereinrichtung aufweist, optional eine Ausführungsform der erfindungsgemäßen Navigationszielvorgabevorrichtung. Das Kraftfahrzeug kann vorzugsweise als Kraftwagen ausgestaltet sein, beispielsweise als teilautonom und/oder pilotiert fahrender Personenkraftwagen. Es ergeben sich die oben genannten Vorteile.

Die Erfindung umfasst auch die Kombinationen der beschriebenen Ausführungsformen.

Im Folgenden sind Ausführungsbeispiele der Erfindung beschrieben. Hierzu zeigt:
- Fig. 1: eine schematische Darstellung zu einer ersten Ausführungsform der erfindungsgemäßen Navigationszielvorgabevorrichtung und des erfindungsgemäßen Verfahrens; und
- Fig. 2: eine schematische Darstellung zu einer weiteren Ausführungsform des erfindungsgemäßen Verfahrens.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

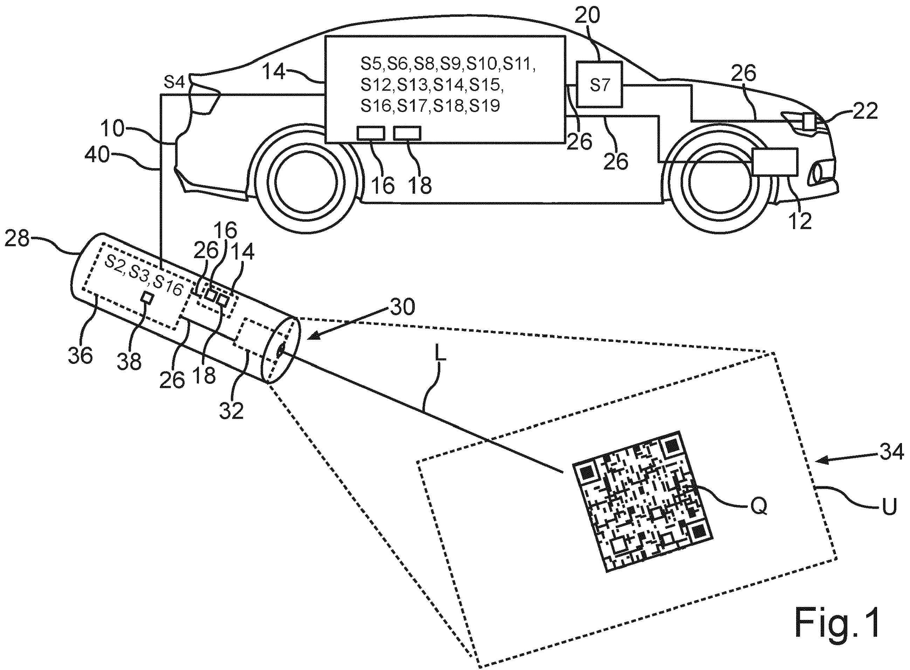

Die Fig. 1 veranschaulicht das Prinzip des erfindungsgemäßen Verfahrens anhand eines ersten Ausführungsbeispiels.

Hierzu zeigt die Fig. 1 ein beispielhaftes Kraftfahrzeug 10, das beispielsweise als Personenkraftwagen ausgestaltet sein kann, der mittels einer Fahrerassistenzeinrichtung 12 in einem teilautonomen und/oder pilotierten Fahrmodus betrieben werden kann. Die Fahrerassistenzeinrichtung 12 kann dabei zum Beispiel als dem Fachmann bekanntes Fahrerassistenzsystem ausgestaltet sein.

Das Kraftfahrzeug 10 weist eine Steuereinrichtung 14 auf, die zum Beispiel als Steuergerät oder Steuerplatine ausgestaltet sein kann. Die beispielhafte Steuereinrichtung 14 kann eine Prozessoreinrichtung 16 aufweisen, die zum Beispiel mehrere Mikroprozessoren aufweisen kann. Die Steuereinrichtung 14 des Kraftfahrzeugs 10 der Fig. 1 kann ebenfalls eine Speichereinrichtung 18 aufweisen, beispielsweise eine SD-Karte, eine Festplatte oder ein Speicherchip. Auf einer solchen Speichereinrichtung kann ein Programmcode zum Durchführen des erfindungsgemäßen Verfahrens abgelegt sein.

Das Kraftfahrzeug 10 der Fig. 1 zeigt weiterhin eine Erfassungseinrichtung 20, die beispielhaft einen Lichtsensor und/oder eine Kamera 22 aufweisen kann. Die Kamera kann beispielsweise an einem Rückspiegel, an einer Instrumententafel oder an einer Außenseite des Kraftfahrzeugs 10 angeordnet sein. Die Erfassungseinrichtung 20 kann beispielsweise als Steuerplatine ausgestaltet sein. Zum Auswerten der beispielhaften Kamerabilder oder der Information des Lichtsensors kann die Steuereinrichtung 14 zum Beispiel eine Bildverarbeitungssoftware oder eine Software zum Auswerten des entsprechenden Signals aufweisen. Die beispielhafte Erfassungseinrichtung 20 kann zum Beispiel ein bereits vorhandenes Erfassungssystem des Kraftfahrzeugs 10, das für ein pilotiertes Fahren verbaut wurde, sein.

Die Komponenten des Kraftfahrzeugs sind in der Fig. 1 durch Datenkommunikationsverbindungen 26 verbunden dargestellt. Vorzugsweise kann eine solche Datenkommunikationsverbindung 26 zum Beispiel ein Datenbus des Kraftfahrzeugs 10 sein, oder beispielsweise eine gängige drahtlose Datenkommunikationsverbindung.

Die Fig. 1 zeigt ebenfalls eine beispielhafte Navigationszielvorgabevorrichtung 28, die beispielsweise als Laser-Pointer ausgestaltet sein kann. Im Beispiel der Fig. 1 ist die Navigationszielvorgabevorrichtung 28 als mobiles, portables Gerät ausgestaltet, kann jedoch alternativ ein Gerät des Kraftfahrzeugs 10 sein, das zum Beispiel an einem Rückspiegel oder an einer Instrumententafel angeordnet sein kann. Bei der beispielhaften Anordnung in dem Kraftfahrzeug 10 kann die Navigationszielvorgabevorrichtung 28 zum Beispiel über ein Kugelgelenk drehbar gelagert sein.

Die beispielhafte Navigationszielvorgabevorrichtung 28 kann beispielhaft stabförmig oder länglich ausgestaltet sein, und zum Beispiel an einem Vorgabebereich 30, der zum Beispiel an einem Ende der Stabform sein kann, eine Ausgabeeinrichtung 32 aufweisen. In der beispielhaften Ausführung als Laser-Pointer kann die Ausgabeeinrichtung 32 als dem Fachmann aus dem Stand der Technik bekannte Lichtzeiger ausgestaltet sein und dazu ein geeignetes Leuchtmittel aufweisen. Alternativ oder zusätzlich kann die Ausgabeeinrichtung 32 zum Beispiel als Bildschirm und/oder als Leuchte ausgestaltet sein, wozu die Ausgabeeinrichtung 32 zum Beispiel ein Leuchtmittel, beispielsweise mehrere Leuchtdioden oder eine Lampe, aufweisen kann.

Im Beispiel der Fig. 1 ist dabei ein Strahlengang L gezeigt, entlang dem beispielhaft ein Lichtstrahl ausgegeben werden kann. Ist die Ausgabeeinrichtung 32 beispielsweise dazu ausgestaltet, ein Bild 34 oder ein großes Lichtfeld auszugeben, so kann dieses auf einen Untergrund als Projektionsfläche ausgegeben werden. Im Beispiel der Fig. 1 kann die Ausgabeeinrichtung 32 zum Beispiel ein Bild 34 der Kraftfahrzeugumrisse U und/oder ein Bild 34 eines QR-Codes als beispielhafter Identifikationskode Q, der für die Navigationszielvorgabevorrichtung 28 spezifisch ist, ausgeben (Verfahrensschritt S1). Zum Projizieren oder Ausgeben der Fahrzeugumrisse U kann beispielsweise an dem Vorgabebereich 30 eine Schablone angeordnet sein, sodass das Licht zum Beispiel nur in den durch die Schablone vorgegebenen Umrissen auf die Projektionsfläche auftrifft.

Optional kann der Identifikationskode Q zum Beispiel von der Steuereinrichtung 14 des Kraftfahrzeugs 10 erzeugt werden, und über eine Datenkommunikationsverbindung an die Navigationszielvorgabevorrichtung 28 übergeben werden. Alternativ kann ein solcher Identifikationskode Q von dem Kraftfahrzeug 10, also der Steuereinrichtung 14, "gelernt" werden, d.h. der Identifikationskode Q kann in die Prozessoreinrichtung 16 und/oder die Speichereinrichtung 18 einprogrammiert worden sein.

Eine mögliche Variante kann vorsehen, dass das Bild 34 zum Beispiel ein großes P zeigt, um den Benutzerkomfort zu erhöhen, da der Benutzer nur sehen kann, dass er gerade eine gewünschte Parkposition vorgibt. Ein solches beispielhaftes Bild 34 kann zum Beispiel durch ein Bildsignal der Ausgabeeinrichtung 32 beschrieben werden, wobei das Bildsignal ausgegeben wird, oder aber es kann eine entsprechende Schablone an dem Vorgabebereich 30 angebracht sein.

Die Navigationszielvorgabevorrichtung 28 weist eine Ausrichtungserfassungseinrichtung 36 auf, also beispielsweise eine Bauteilgruppe mit einem Lagesensor und/oder einem Drehratensensor und/oder einem Gyrometer. Optional kann die Ausrichtungserfassungseinrichtung 36 eine Prozessoreinrichtung 38 zum Erzeugen des Ausrichtungssignals aufweisen.

Die Navigationszielvorgabevorrichtung 28 kann optional dazu eingerichtet sein, zum Beispiel ein Funksignal an das Kraftfahrzeug 10 zu übertragen, wobei das Funksignal zum Entriegeln und/oder Verriegeln des Kraftfahrzeugs 10 sein kann. Mit anderen Worten kann die Navigationszielvorgabevorrichtung 28 optional mit einer aus dem Stand der Technik bekannten Funkschlüssel-Technologie ausgestattet sein.

Die Fig. 1 zeigt ebenfalls eine optionale Steuereinrichtung 14 der Navigationszielvorgabevorrichtung 28, die - als Alternative zu der Durchführung des Verfahrens durch die Steuereinrichtung 14 des Kraftfahrzeugs 10 - das Verfahren durchführen kann.

In dem Ausführungsbeispiel der Fig. 1 kann ein Benutzer der Navigationszielvorgabevorrichtung 28 beispielsweise außerhalb des Kraftfahrzeugs stehen und die Navigationszielvorgabevorrichtung 28 in der Hand halten. Im Beispiel der Fig. 1 kann beispielsweise der Benutzer entscheiden, dass er das Navigationsziel wegen Schneeglätte manuell vorgeben möchte. In einer solchen Grenzsituation kann das Kraftfahrzeug 10 unter Umständen im vollpilotierten Fahrmodus überfordert sein, weswegen eine manuelle Vorgabe des Navigationsziels sinnvoll sein kann. Eine ähnliche Grenzsituation kann zum Beispiel vorliegen, wenn zum Beispiel Verkehrsschilder von zum Beispiel Schnee oder Dreck verdeckt sind und von der Sensorik des Kraftfahrzeugs 10 beim pilotierten Verfahren nicht ausgelesen werden können. Beispielsweise mithilfe eines Bedienelements, beispielsweise eines Knopfs oder eines berührungssensitiven Schalters der Navigationszielvorgabeeinrichtung 28, kann die Ausgabeeinrichtung 32 aktiviert werden. Beispielhaft steht der Benutzer gerade neben einem freien Parkplatz und hält die Navigationszielvorgabevorrichtung 28 derart in der Hand, dass das beispielhafte Bild 34 oder ein beispielhafter Lichtstrahl auf den freien Parkplatz projiziert oder ausgegeben wird. Der freie Parkplatz ist in diesem Beispiel also der von dem Benutzer ausgewählte Fahrzielbereich. Die Ausrichtungserfassungseinrichtung 36 kann zum Beispiel eine schräge Ausrichtung erfassen (Verfahrensschritt S2) und ein Ausrichtungssignal erzeugen (S3), das die Ausrichtung beschreibt. Alternativ oder zusätzlich kann die Ausrichtungserfassungseinrichtung 36 zum Beispiel einen Drehwinkel erfassen, der durch das Ausrichtungssignal beschrieben werden kann.

Optional kann vorgesehen sein, dass der Benutzer zum Beispiel durch ein doppeltes Drücken oder Berühren eines Bedienelements bestätigen muss, dass die aktuelle Ausrichtung der Navigationszielvorgabevorrichtung 28 eine das Fahrtziel vorgebende Ausrichtung ist. Alternativ oder zusätzlich kann vorgesehen sein, dass der Benutzer zum Beispiel während einer ganzen Bewegung des Kraftfahrzeugs 10, also während des ganzen, pilotierten Einparkvorgang des Kraftfahrzeugs 10, ein solches Bedienelement gedrückt halten muss. Dadurch hat Benutzer noch einmal eine zusätzliche Kontrolle und eine zusätzliche Möglichkeit, notfalls den Einparkvorgang abzubrechen.

Alternativ oder zusätzlich kann beispielsweise eine absolute Position als Ausrichtung erfasst werden (S2), beispielsweise eine absolute geographische Position mit spezifischen geographischen Koordinaten. Hierzu kann die Navigationszielvorgabevorrichtung 28, insbesondere die Ausrichtungserfassungseinrichtung 36, zum Beispiel einen GPS-Empfänger aufweisen.

Beispielsweise über eine drahtlose Datenkommunikationsverbindung 40 kann das erzeugte Ausrichtungssignal im Verfahrensschritt S4 an die Steuereinrichtung 14 des Kraftfahrzeugs 10 übertragen werden, die das Ausrichtungssignal empfängt (S5). Das Ausrichtungssignal beschreibt dabei die Zielvorgabeausrichtung der Navigationszielvorgabevorrichtung 28, also die Ausrichtung auf den Fahrzielbereich. In Abhängigkeit von diesen empfangenen Ausrichtungssignal kann die Steuereinrichtung 14 zum Beispiel feststellen (S6), auf welchen Koordinaten sich der Fahrzielbereich befindet, und den markierten Parkplatz als Navigationsziel feststellen.

Die Erfassungseinrichtung 20 des Kraftfahrzeugs 10 erfasst die Projektion des Bildes 34 (S7), und überträgt ein entsprechendes Zielvorgabesignal an die Steuereinrichtung 14. Diese empfängt das Zielvorgabesignal Verfahrensschritt S8. Optional kann die Steuereinrichtung 14 den beispielhaften QR-Code auslesen, beispielsweise mithilfe einer Bildverarbeitungssoftware, und damit den Identifikationskode Q feststellen (S9). Der festgestellte Identifikationskode Q kann beispielsweise mit einem in der Speichereinrichtung 18 abgelegten Identifikationskode verglichen werden, und im Beispiel der Fig. 1 kann beispielsweise durch einen solchen Vergleich die Berechtigung der Navigationszielvorgabevorrichtung 28 überprüft (S10) und festgestellt werden.

Im Verfahrensschritt S11 wird der Fahrzielbereich festgelegt, also der beispielhafte Parkplatz. Durch beispielsweise Vergleich der Koordinaten des Fahrzielbereich und einer aktuellen Position des Kraftfahrzeugs 10 kann die Steuereinrichtung 14 beispielsweise feststellen, in welcher Relation sich das Kraftfahrzeug 10 gerade zu den Fahrzielbereich befindet, im Beispiel der Fig. 1 schräg links von dem Fahrzielbereich. (S12).

Die Zielposition und die analysierten Fahrzeugumrisse können miteinander abgeglichen werden, sodass die Steuereinrichtung 14 zum Beispiel auswerten kann, in welchem Bereich des Parkplatzes das Kraftfahrzeugheck nach dem einparken gehen soll. Diese Position kann dann durch Auswerten des Bildes 34 ermittelt werden (S15), und hierzu kann beispielsweise das Bild 34 des Umrisses U farbliche Markierungen zum Verdeutlichen der Soll-Position aufweisen.

Zur zusätzlichen Unterstützung einer Vermessung und/oder Erfassen der Ausrichtung (S2) können die Ausrichtungserfassungseinrichtung 36 und/oder die Steuereinrichtung 14 zum Beispiel eine Entfernungsmessung durchführen, indem beispielhaft das Kamerabild mit einem Winkel der Navigationszielvorgabevorrichtung 28 analysiert werden kann, oder, alternativ, die Ausrichtungserfassungseinrichtung 36 hierfür zum Beispiel einen aus dem Stand der Technik bekannten Entfernungsmesser aufweisen kann.

Optional kann die Navigationszielvorgabevorrichtung 28 den Bewegungspfad, also die Wegstrecke, die das Kraftfahrzeug 10 fahren soll, vorgeben. Hierzu kann der Benutzer beispielsweise die Navigationszielvorgabevorrichtung 28 von dem Kraftfahrzeug 10 zu dem Fahrtziel schwenken. Hierdurch kann beispielsweise eine Referenzausrichtung der Navigationszielvorgabevorrichtung 28 mit der Zielvorgabeausrichtung verglichen werden, beispielsweise nach Empfangen eines Drehratensignals als Ausrichtungssignal (S13). Im optionalen Verfahrensschritt S14 kann man zum Beispiel einen Drehwinkel festgestellt werden.

Im Verfahrensschritt S17 werden in Abhängigkeit von der festgestellten, relativen Position des Kraftfahrzeugs 10 zu dem festgelegten Fahrzielbereich und in Abhängigkeit von dem festgestellten Navigationsziel der Bewegungspfad festgelegt und ein entsprechendes Navigationssignal, das diesem Bewegungspfad beschreibt, erzeugt (S18), und dieses an die Fahrerassistenzeinrichtung 12 übertragen (S19). Das Navigationssignal ist dann das Steuersignal zum Betreiben der Fahrerassistenzeinrichtung 12.

Optional kann eine Kontaktaufnahme zu dem Kraftfahrzeug 10 durch die Navigationszielvorgabevorrichtung 28, durch zum Beispiel Übermitteln der festgestellten Position des Benutzers an die Steuereinrichtung 14. Dies kann, beispielsweise mithilfe eines GPS-Signals, beispielsweise über eine Langfunkverbindung erfolgen, oder über eine Kopplung mit zum Beispiel einem Smartphone des Benutzers. Beim Koppeln über ein beispielhaftes Smartphone kann der Positionssensor des Smartphones und die Fähigkeit des Smartphones für eine Lang-Funkstrecken-Übertragung genutzt werden. Dies ist besonders hilfreich, wenn sich der Benutzer weit weg vom Kraftfahrzeug 10 befindet.

Befindet sich, wie im Beispiel der Fig. 1, der Benutzer außerhalb des Kraftfahrzeugs 10, kann das erzeugte Navigationssignals beispielsweise eine geringe Geschwindigkeit des Kraftfahrzeugs 10 zum Einparken beschreiben, so das Benutzer des Kraftfahrzeugs 10 nicht von einer schnellen Bewegung des Kraftfahrzeugs 10 erschreckt womöglich verletzt wird. Beispielsweise ein Lagesensor mit Positionserkennung dazu verwendet werden, und durch die Steuereinrichtung 14 kann festgestellt werden, ob sich der Fahrer im Kraftfahrzeug 10 oder außerhalb aufhält. Ein geeigneter Standard zur Lokalisierung in geschlossenen Räumen, zum Beispiel basierend auf Bluetooth Low Energy (Bluetooth-LE), ist dem Fachmann aus dem Stand der Technik bekannt. Ein solches System kann auf einem Sender-Empfänger-Prinzip basieren, bei dem kleine Sender ("beacons") als Signalgeber platziert werden können, die in festen Zeitintervallen Signale senden können. Kommt ein Empfänger, zum Beispiel die Navigationszielvorgabevorrichtung 28, in die Reichweite eines Senders, kann Standard für Identifikation ("Universal Unique Identifier", "UUI") identifiziert und seine Signalstärke gemessen werden. Durch zum Beispiel Trilateration oder Fingerprinting-Verfahren kann die Position der Navigationszielvorgabevorrichtung 28 ermittelt werden. Hierdurch kann also beispielsweise festgestellt werden, ob sich der Benutzer des Kraftfahrzeugs 10 gerade im Kraftfahrzeug 10 befindet oder nicht (S16).

Das Feststellen der relativen Position des Benutzers zum Kraftfahrzeug (S16) kann durch die Steuereinrichtung 14 erfolgen, oder durch die Steuereinrichtung 14 der Navigationszielvorgabevorrichtung 28, oder durch die Ausrichtungserfassungseinrichtung 36.

Zur Benutzung als Fernbedienung kann beispielsweise vorgesehen sein, dass die beispielhafte Lichtzeiger-Funktion nur auf den letzten 20 Metern des Bewegungspfades aktiviert wird, also ab Sichtkontakt mit dem Kraftfahrzeug 10.

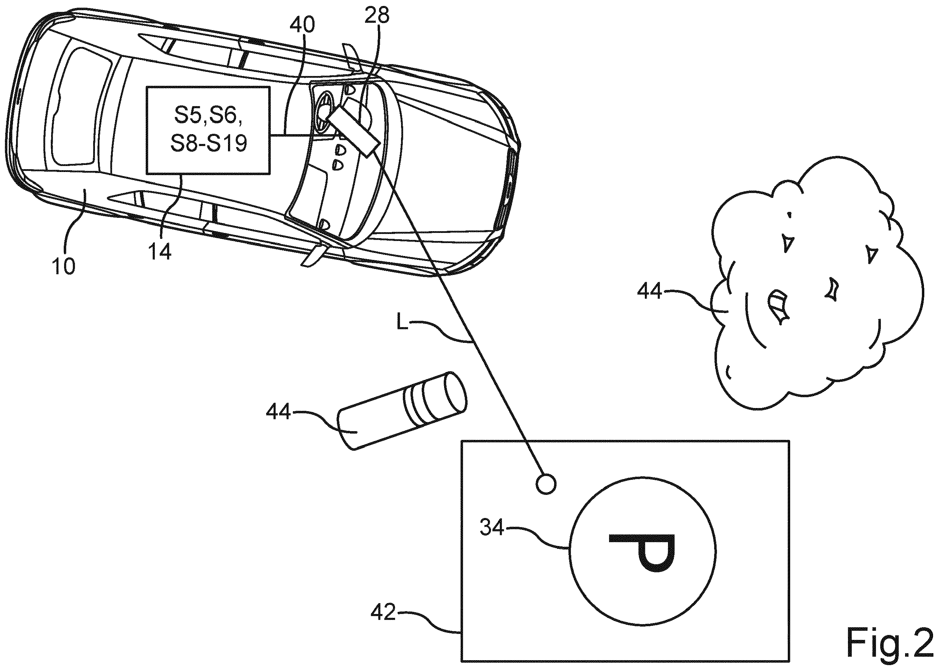

Die Fig. 2 zeigt ein weiteres Ausführungsbeispiel, indem das erfindungsgemäße Verfahren und die erfindungsgemäßen Vorrichtungen nur schematisch gezeigt sind, wobei im Folgenden nur auf die Unterschiede eingegangen wird. Die Fig. 2 zeigt in einer Aufsicht das Kraftfahrzeug 10. Der Benutzer kann sich bei diesem Beispiel innerhalb des Kraftfahrzeugs 10 befinden und die Navigationszielvorgabevorrichtung 28 zum Beispiel auf der Instrumententafel abgelegt haben, oder die Navigationszielvorgabevorrichtung 28 kann zum Beispiel drehbar an der Instrumententafel oder an einem Rückspiegel angeordnet sein. Das erfindungsgemäße Verfahren kann beispielsweise wie oben bereits zur Fig. 1 erklärt durchgeführt werden. Wegen der bessern Übersichtlichkeit sind zum Beispiel die technischen Details der Navigationszielvorgabevorrichtung 28 nicht gezeigt, obwohl diese denjenigen in der Fig. 1 entsprechen können. Aus Gründen der Übersichtlichkeit sind auch die Fahrerassistenzeinrichtung 12 und die Erfassungseinrichtung 20 des Kraftfahrzeugs 10 in der Fig. 2 nicht gezeigt.

Der Benutzer kann beispielsweise mit der Navigationszielvorgabevorrichtung 28 auf einen freien Parkplatz 42 zeigen, wobei die Ausgabeeinrichtung 32 der Navigationszielvorgabevorrichtung 28 zum Beispiel einen Lichtstrahl entlang der Strahlenganges L auf den Parkplatz 42 werfen kann. Alternativ oder zusätzlich kann die Navigationszielvorgabevorrichtung 28 mithilfe der Ausgabeeinrichtung 32 zum Beispiel das Bild 34 auf den Parkplatz 42 als Fahrzielbereich projizieren, beispielhaft das Bild 34 eines großen Ps in einem Kreis.

Im Beispiel der Fig. 2 kann sich ein Hindernis 44 zwischen dem Kraftfahrzeug 10 und dem freien Parkplatz 42 befinden, beispielsweise ein Pfosten. Bei Festlegen des Bewegungspfades (17) kann dieses Hindernis 44 berücksichtigt werden, das zum Beispiel durch eine kraftfahrzeugeigene Sensorik als solches erkannt werden kann. Ein möglicher Bewegungspfad des Kraftfahrzeugs 10 kann dann beispielsweise nicht entlang oder parallel zu dem Strahlengang L erfolgen, sondern zum Beispiel in einer Schlangenlinien zwischen dem beispielhaften Pfosten und dem beispielhaften Baum der Fig. 2.

Insgesamt veranschaulichen die Ausführungsbeispiele, wie durch die Erfindung eine Steuerung eines Kraftfahrzeugs 10 bereitgestellt wird, vorzugsweise eine Laser-Steuerung.

Die Navigationszielvorgabevorrichtung 28 kann gemäß einem weiteren, bevorzugten Ausführungsbeispiel vorzugsweise als Fahrzeugschlüssel ausgestaltet sein, der vorzugsweise drei Funktionen erfüllen kann: 1. eine manuelle Steuerung des Kraftfahrzeugs 10 (ohne Lenkrad) aus dem Kraftfahrzeug 10 heraus, 2. ein Anzeigen eines Fahrzielbereichs, vorzugsweise einer Parkposition (der Bediener/Benutzer steht zum Beispiel außerhalb des Kraftfahrzeugs 10), und 3. Rufen des Kraftfahrzeugs 10 aus der Ferne (kein Sichtkontakt).

In der ersten Variante, der manuellen Steuerung des Kraftfahrzeugs (ohne Lenkrad) aus dem Kraftfahrzeug 10 heraus, kann zum Beispiel ein autonomes Kraftfahrzeug 10 in eine Grenzsituation kommen. Es kann zum Beispiel an einer defekten Ampel stehen und die Straßenschilder können von einem am Rand stehenden Lastkraftwagen verdeckt werden. In diesem Beispiel kann der Benutzer zum Beispiel auf seinem Fahrersitz bleiben und seine Fahrzeugschlüssel (vorzugsweise mit einem integrierten Laser-Pointer als Ausgabeeinrichtung 32) verwenden, um einen Trajektionspunkt und/oder eine Trajektorie auf die Straße zu projizieren. Das Kraftfahrzeug 10 kann dem Punkt und/oder der Trajektorie folgen, kann sich also teilautonom verhalten. Solange der Benutzer auf zum Beispiel einen Knopf auf dem Fahrzeugschlüssel drückt, kann das Kraftfahrzeug 10 in langsamer Geschwindigkeit zum Projektionpunkt hin und/oder entlang der Trajektorie fahren. Mit dem beispielhaften Fahrzeugschlüssel ist dabei eine Navigationszielvorgabevorrichtung 28 mit integrierter Fahrzeugschlüssel Funktion gemeint.

Optional kann der beispielhafte Laser-Pointer die Zielposition und den Umriss U des Kraftfahrzeugs 10 anzeigen. Durch beispielsweise einen Lagesensor im beispielhafte Laser-Pointer und einen Abgleich einer errechneten Zielposition mit den Fahrzeugumrissen, welche durch zum Beispiel die Kamera 22 erfasst werden können, kann die genaue Zielposition ermittelt werden (S6).

In der zweiten Variante, beim Anzeigen einer Parkposition (der Bediener/Benutzer steht außerhalb des Kraftfahrzeugs 10), kann der Benutzer beispielsweise eines autonomen Kraftfahrzeugs 10 außerhalb des Kraftfahrzeugs 10 am Straßenrand stehen. Er möchte das Kraftfahrzeug 10 nun in einen bestimmten Parkplatz lotsen. Dazu kann er vorzugsweise zwei Optionen haben: a) eine distinkte Geste, zum Beispiel ein doppeltes Drücken ("doublepress") oder mittels eines separaten Knopfes des beispielhaften Schlüssels, können einen autonomen Parkvorgang ausführen. Dazu muss lediglich die Zielposition mit dem beispielhaften Laser markiert werden. In einer zweiten Option b) kann ein Lotsen des Kraftfahrzeugs 10 in die beispielhafte Parklücke beispielsweise durch ein langes Drücken ("longpress") erfolgen. Dazu kann der beispielhafte Laser markieren, welchen Weg, also welchem Bewegungspfad, das Kraftfahrzeug 10 folgen soll (vergleiche Variante 1).

In der dritten Variante, dem Rufen des Kraftfahrzeugs 10 aus der Ferne (kein Sichtkontakt), kann der Benutzer keinen Sichtkontakt zum Kraftfahrzeug 10 haben. Benutzer und Kraftfahrzeug 10 können sich in einiger Entfernung zueinander befinden. Nach einer Kontaktaufnahme mit dem Kraftfahrzeug 10 kann der beispielhafte Fahrzeugschlüssel, also die beispielhafte Navigationszielvorgabevorrichtung 28 mit der Fahrzeugschlüssel-Funktion, eine Position des Benutzers übermitteln und das Kraftfahrzeug 10 zu einer autonomen Fahrt zur Position des Benutzers "antriggern", also die autonome Fahrt vorgeben und auslösen. Bei einer ersten Option A) kann der Schlüssel selbst mit einer technischen Ausstattung zur Positionsbestimmung ausgestattet sein, sowie einer Funkeinrichtung. Dadurch kann der beispielhafte Fahrzeugschlüssel selbst die Position des Nutzers an das Kraftfahrzeug 10 übermitteln. In einer Option B) kann der Schlüssel sich mit zum Beispiel einem Smartphone des Benutzers verbinden (zum Beispiel per BT-LE). Positionsdaten und Apholwunsch können dann über das Smartphone und dessen integrierte Positionsbestimmungsmethode an das Kraftfahrzeug 10 gesendet werden.

Es ergeben sich die oben genannten Vorteile.

In einer beispielhaften technischen Umsetzung kann die Navigationszielvorgabeeinrichtung 28, die beispielhaft als Fahrzeugschlüssel ausgestaltet sein kann, folgende Elemente aufweisen: einen Laser-Pointer, welche ein eindeutiges Merkmal, also vorbestimmtes Bild 34, auf zum Beispiel eine Straße projizieren kann, zum Beispiel einen QR-Code; eine eindeutige, fälschungssichere (Funk)kennung zur zweifelsfreien Kommunikation zwischen Navigationszielvorgabeeinrichtung 28 und Kraftfahrzeug 10; und/oder zum Beispiel einen Taste zum Führen des Kraftfahrzeugs 10 und/oder zum Beispiel für den Parkbefehl und/oder für einen Abholbefehl.

Optionale Elemente können sein: eine Positionsbestimmung (zum Beispiel GPS/GLONASS/Galileo) und/oder eine Funkverbindung Langstrecke (zum Beispiel LTE) und/oder eine Verbindung zu einem mobilen Endgerät, beispielsweise einem Smartphone (zum Beispiel Bluetooth-LE) und/oder eine Lageerkennung zur eindeutigen Positionsbestimmung (zum Beispiel ein Gyrometer zum Abgleich von Position des beispielhaften Laser-Pointers/Fahrzeugschlüssels und der projizierten Fläche). Optionale Elemente des Kraftfahrzeugs 10 können sein: ein Funksignal-Receiver und/oder eine Positionsbestimmung und/oder eine Kamera zum Erfassen des Laserspunktes und/oder ein autonomes Fahrsystem mit Umfeld- und Positionserkennung. Vorzugsweise kann der beispielhafte Fahrzeugschlüssel die ersten drei genannten Fahrzeugschlüssel-Elemente aufweisen, sowie eines oder mehrere der optionalen Elemente; weiterhin kann das Kraftfahrzeug 10 vorzugsweise alle genannten Kraftfahrzeug-Elemente aufweisen.

Gemäß einem weiteren Ausführungsbeispiel kann in dem Verfahren der Fig. 1 in einem ersten Stufe eine Distanz festgestellt werden zwischen der Navigationszielvorgabevorrichtung 28 und dem Fahrzielbereich und/oder eine Orientierung im Raum, vorzugsweise eine relative Position mithilfe eines Lagesensors. In der zweiten Stufe kann ein Abgleich des Zielvorgabesignals aus der beispielhaften Kamera 22 und/oder einen beispielhaften Laserpunkt erfolgen.

Die Erfindung betrifft weiterhin die Ausführungsformen:
1. Ein Verfahren zum Betreiben einer Fahrerassistenzeinrichtung (12) eines Kraftfahrzeugs (10) mithilfe einer Navigationszielvorgabevorrichtung (28), aufweisend die durch eine Steuereinrichtung (14) durchgeführten Schritte:
   - Empfangen eines Zielvorgabesignals aus einer Erfassungseinrichtung (20) des Kraftfahrzeugs (10), wobei das Zielvorgabesignal eine durch die Erfassungseinrichtung (20) erfasste Projektion auf einer durch das Kraftfahrzeug (10) befahrbaren Fahrunterlage beschreibt (S8),
   - Festlegen desjenigen Anteils der befahrbaren Fahrunterlage, der mit dem Licht der Projektion beaufschlagt wird, als Fahrzielbereich (S11),
   - anhand des empfangenen Zielvorgabesignals Feststellen einer aktuellen, relativen Position des Kraftfahrzeugs (10) zu dem festgelegten Fahrzielbereich (S12),
   - Empfangen eines Ausrichtungssignals aus einer Ausrichtungserfassungseinrichtung (36) der Navigationszielvorgabevorrichtung (28), das eine räumliche Zielvorgabeausrichtung der Navigationszielvorgabevorrichtung (28) auf den Fahrzielbereich beschreibt (S5),
   - in Abhängigkeit von dem empfangenen Ausrichtungssignal Feststellen einer absoluten Position des Fahrzielbereichs als Navigationsziel (S6),
   - in Abhängigkeit von der festgestellten relativen Position des Kraftfahrzeugs (10) zu dem festgelegten Fahrzielbereich und dem festgestellten Navigationsziel Festlegen eines Bewegungspfades von einer aktuellen Position des Kraftfahrzeugs (10) zu dem Navigationsziel (S17),
   - Erzeugen eines Navigationssignals, das ein Steuern des Kraftfahrzeugs (10) entlang des festgelegten Bewegungspfads an das Navigationsziel beschreibt (S18), und
   - Übertragen des erzeugten Navigationssignals an die Fahrerassistenzeinrichtung (12) des Kraftfahrzeugs (10, S19).

Die Erfindung betrifft weiterhin die folgenden, jeweils optionalen Ausführungsformen:
2. Verfahren nach Ausführungsform 1, aufweisend den durch die Steuereinrichtung (14) durchgeführten Schritt:
   - Empfangen eines Drehratensignals als Ausrichtungssignal aus der Ausrichtungserfassungseinrichtung (36), das ein Ändern einer Referenzausrichtung der Navigationszielvorgabevorrichtung (28) in die Zielvorgabeausrichtung beschreibt (S13),
      wobei das Feststellen des Navigationsziels (S6) in Abhängigkeit von dem empfangenen Drehratensignal erfolgt; vorzugsweise durch Feststellen eines durch das Drehratensignal beschriebenen Drehwinkels um eine Symmetrieachse der Navigationszielvorgabevorrichtung (28, S14), und/oder durch Feststellen einer durch das Drehratensignal beschriebenen Änderung einer absoluten geographischen Position der Navigationszielvorgabevorrichtung (28).
3. Verfahren nach einem der vorhergehenden Ausführungsformen, wobei das Feststellen des Navigationsziels (S6) durch Festlegen einer Ausrichtung eines Strahlenganges eines ausgegebenen Lichtstrahls einer Ausgabeeinrichtung (32) der Navigationszielvorgabevorrichtung (28) erfolgt, vorzugsweise wobei die Ausgabeeinrichtung (32) als Lichtzeiger ausgestaltet ist.
4. Verfahren nach einem der vorhergehenden Ausführungsformen, wobei das Zielvorgabesignal ein projiziertes Bild (34) eines Umrisses (U) des Kraftfahrzeugs (10) auf eine Projektionsfläche einer Umgebung der Navigationszielvorgabevorrichtung (28) beschreibt; das Verfahren aufweisend die folgenden, durch die Steuereinrichtung (14) durchgeführten Schritte:
   - anhand des empfangenen Zielvorgabesignals Ermitteln einer Soll-Position des Kraftfahrzeugs (10) an dem Navigationsziel (S15), wo-bei das erzeugte Navigationssignal die Soll-Position beschreibt.
5. Verfahren nach einem der vorhergehenden Ausführungsformen, wobei die Projektion ein Bild (34) eines für die Navigationszielvorgabevorrichtung (28) spezifischen Identifikationscodes (Q) ist, das Verfahren aufweisend die folgenden, durch die Steuereinrichtung (14) durchgeführten Schritte:
   - anhand des empfangenen Zielvorgabesignals: Feststellen des Identifikationscodes (Q, S9), der vorzugsweise ein QR-Code ist,
   - anhand des ermittelten Identifikationscodes (Q): Überprüfen einer Berechtigung der Navigationszielvorgabevorrichtung (28, S10) zum Vorgeben des Navigationsziels,
      wobei das Navigationszielsignal nur dann erzeugt wird (S18), falls das Überprüfen die Berechtigung der Navigationszielvorgabevorrichtung (28) feststellt.
6. Verfahren nach einem der vorhergehenden Ausführungsformen, aufweisend den folgenden, durch die Steuereinrichtung (14) durchgeführten Schritt:
   - anhand der aktuellen Position des Kraftfahrzeugs (10) und/oder einer aktuellen Position der Navigationszielvorgabevorrichtung (28): Feststellen einer relativen Position eines Benutzers der Navigationszielvorgabevorrichtung (28) zum Kraftfahrzeug (10, S16),
      wobei das Festlegen des Bewegungspfades von der festgestellten Position des Benutzers abhängt.
7. Steuereinrichtung (14), die dazu eingerichtet ist, die eine Steuereinrichtung (14) betreffenden Verfahrensschritte eines Verfahrens nach einem der vorhergehenden Ausführungsformen durchzuführen.
8. Navigationszielvorgabevorrichtung (28), aufweisend eine Ausrichtungserfassungseinrichtung (36), wobei die Ausrichtungserfassungseinrichtung (36) zum Erfassen einer räumlichen Ausrichtung der Navigationszielvorgabevorrichtung (28, S2) ausgestaltet und/oder eingerichtet ist; weiterhin aufweisend eine Ausgabeeinrichtung (32), wo-bei die Ausgabeeinrichtung (32) a) als Lichtzeiger zum Ausgeben eines Lichtstrahls ausgestaltet ist, und/oder b) zum Ausgeben und/oder Projizieren eines Bildes (34).
9. Navigationszielvorgabevorrichtung (28) nach Ausführungsform 8, aufweisend eine Steuereinrichtung (14) nach Ausführungsform 7.
10. Navigationszielvorgabevorrichtung (28) nach Ausführungsform 8 oder 9, die als Kraftfahrzeugschlüssel ausgestaltet und/oder eingerichtet ist.
11. Navigationszielvorgabevorrichtung (28) nach einem der Ausführungsformen 8 bis 10, die als mobiles, portables Gerät ausgestaltet ist.
12. Kraftfahrzeug (10), aufweisend eine Steuereinrichtung (14) nach Ausführungsform 7, optional zusätzlich aufweisend eine Navigationszielvorgabevorrichtung (28) nach einem der Ausführungsformen 8 bis 11.

## Patentansprüche

1. Verfahren zum Betreiben einer Fahrerassistenzeinrichtung (12) eines Kraftfahrzeugs (10) mithilfe einer Navigationszielvorgabevorrichtung (28), aufweisend die durch eine Steuereinrichtung (14) durchgeführten Schritte:
- Empfangen eines Zielvorgabesignals aus einer Erfassungseinrichtung (20) des Kraftfahrzeugs (10), wobei das Zielvorgabesignal eine durch die Erfassungseinrichtung (20) erfasste Projektion auf einer durch das Kraftfahrzeug (10) befahrbaren Fahrunterlage beschreibt (S8),
- Festlegen desjenigen Anteils der befahrbaren Fahrunterlage, der mit dem Licht der Projektion beaufschlagt wird, als Fahrzielbereich (S11),
- anhand des empfangenen Zielvorgabesignals Feststellen einer aktuellen, relativen Position des Kraftfahrzeugs (10) zu dem festgelegten Fahrzielbereich (S12),
- Empfangen eines Ausrichtungssignals aus einer Ausrichtungserfassungseinrichtung (36) der Navigationszielvorgabevorrichtung (28), das eine räumliche Zielvorgabeausrichtung der Navigationszielvorgabevorrichtung (28) auf den Fahrzielbereich beschreibt (S5),
- in Abhängigkeit von dem empfangenen Ausrichtungssignal Feststellen einer absoluten Position des Fahrzielbereichs als Navigationsziel (S6),
- in Abhängigkeit von der festgestellten relativen Position des Kraftfahrzeugs (10) zu dem festgelegten Fahrzielbereich und dem festgestellten Navigationsziel Festlegen eines Bewegungspfades von einer aktuellen Position des Kraftfahrzeugs (10) zu dem Navigationsziel (S17),
- Erzeugen eines Navigationssignals, das ein Steuern des Kraftfahrzeugs (10) entlang des festgelegten Bewegungspfads an das Navigationsziel beschreibt (S18), und
- Übertragen des erzeugten Navigationssignals an die Fahrerassistenzeinrichtung (12) des Kraftfahrzeugs (10, S19);
wobei das Verfahren umfasst:
- anhand des empfangenen Zielvorgabesignals, wobei die Projektion ein Bild (34) eines für die Navigationszielvorgabevorrichtung (28) spezifischen Identifikationscodes (Q) ist: Feststellen des Identifikationscodes (Q, S9); und
- anhand des ermittelten Identifikationscodes (Q): Überprüfen einer Berechtigung der Navigationszielvorgabevorrichtung (28, S10) zum Vorgeben des Navigationsziels;
wobei das Navigationszielsignal nur dann erzeugt wird (S18), falls das Überprüfen die Berechtigung der Navigationszielvorgabevorrichtung (28) feststellt.

2. Verfahren nach Anspruch 1, aufweisend den durch die Steuereinrichtung (14) durchgeführten Schritt:
- Empfangen eines Drehratensignals als Ausrichtungssignal aus der Ausrichtungserfassungseinrichtung (36), das ein Ändern einer Referenzausrichtung der Navigationszielvorgabevorrichtung (28) in die Zielvorgabeausrichtung beschreibt (S13),
wobei das Feststellen des Navigationsziels (S6) in Abhängigkeit von dem empfangenen Drehratensignal erfolgt; vorzugsweise durch Feststellen eines durch das Drehratensignal beschriebenen Drehwinkels um eine Symmetrieachse der Navigationszielvorgabevorrichtung (28, S14), und/oder durch Feststellen einer durch das Drehratensignal beschriebenen Änderung einer absoluten geographischen Position der Navigationszielvorgabevorrichtung (28).

3. Verfahren nach einem der vorhergehenden Ansprüche,
wobei das Feststellen des Navigationsziels (S6) durch Festlegen einer Ausrichtung eines Strahlenganges eines ausgegebenen Lichtstrahls einer Ausgabeeinrichtung (32) der Navigationszielvorgabevorrichtung (28) erfolgt, vorzugsweise wobei die Ausgabeeinrichtung (32) als Lichtzeiger ausgestaltet ist.

4. Verfahren nach einem der vorhergehenden Ansprüche, wobei das Zielvorgabesignal ein projiziertes Bild (34) eines Umrisses (U) des Kraftfahrzeugs (10) auf eine Projektionsfläche einer Umgebung der Navigationszielvorgabevorrichtung (28) beschreibt; das Verfahren aufweisend die folgenden, durch die Steuereinrichtung (14) durchgeführten Schritte:
- anhand des empfangenen Zielvorgabesignals Ermitteln einer Soll-Position des Kraftfahrzeugs (10) an dem Navigationsziel (S15), wobei das erzeugte Navigationssignal die Soll-Position beschreibt.

5. Verfahren nach einem der vorhergehenden Ansprüche, wobei der Identifikationscode ein QR-Code ist.

6. Verfahren nach einem der vorhergehenden Ansprüche, aufweisend den folgenden, durch die Steuereinrichtung (14) durchgeführten Schritt:
- anhand der aktuellen Position des Kraftfahrzeugs (10) und/oder einer aktuellen Position der Navigationszielvorgabevorrichtung (28): Feststellen einer relativen Position eines Benutzers der Navigationszielvorgabevorrichtung (28) zum Kraftfahrzeug (10, S16),
wobei das Festlegen des Bewegungspfades von der festgestellten Position des Benutzers abhängt.

7. Steuereinrichtung (14), die dazu eingerichtet ist, die eine Steuereinrichtung (14) betreffenden Verfahrensschritte eines Verfahrens nach einem der vorhergehenden Ansprüche durchzuführen.

8. Navigationszielvorgabevorrichtung (28), aufweisend eine Ausrichtungserfassungseinrichtung (36), wobei die Ausrichtungserfassungseinrichtung (36) zum Erfassen einer räumlichen Ausrichtung der Navigationszielvorgabevorrichtung (28, S2) ausgestaltet und/oder eingerichtet ist; weiterhin aufweisend eine Ausgabeeinrichtung (32), wobei die Ausgabeeinrichtung (32) a) als Lichtzeiger zum Ausgeben eines Lichtstrahls ausgestaltet ist, und/oder b) zum Ausgeben und/oder Projizieren eines Bildes (34); und wobei die Navigationszielvorgabevorrichtung (28) eine Steuereinrichtung (14) nach Anspruch 7 aufweist..

9. Navigationszielvorgabevorrichtung (28) nach Anspruch 8, die als Kraftfahrzeugschlüssel ausgestaltet und/oder eingerichtet ist.

10. Navigationszielvorgabevorrichtung (28) nach einem der Ansprüche 8 oder 9, die als mobiles, portables Gerät ausgestaltet ist.

11. Kraftfahrzeug (10), aufweisend eine Steuereinrichtung (14) nach Anspruch 7, optional zusätzlich aufweisend eine Navigationszielvorgabevorrichtung (28) nach einem der Ansprüche 8.
